# NEUE EUROPÄISCHE PATENTSCHRIFT

(11) **EP 1 634 729 B2**
(45) Veröffentlichungstag und Bekanntmachung des Hinweises auf die Entscheidung über den Einspruch: **09.03.2011**
(45) Hinweis auf die Patenterteilung: 02.01.2008
(21) Anmeldenummer: 05014068.0
(22) Anmeldetag: 29.06.2005
(51) Int. Cl.: B60D 1/54

(54) **Steuerung für den Antrieb einer Anhängerkupplung**
Control for the drive of a trailer coupling
Commande d'entraînement d'un attelage de remorque

(30) Priorität: 10.09.2004 DE 102004044295
(43) Veröffentlichungstag der Anmeldung: 15.03.2006
(73) Patentinhaber: Jaeger Cartronix GmbH, 61145 Friedberg (DE)
(72) Erfinder: Gloe, Karl-Heinz, 61231 Bad Nauheim (DE); Wiese, Wolfgang, 61389 Schmitten (DE)
(74) Vertreter: KEIL & SCHAAFHAUSEN Patentanwälte

(56) Entgegenhaltungen:
- EP-A- 1 084 872
- EP-A- 1 225 069
- EP-A- 1 380 446

## Beschreibung

Die Erfindung betrifft eine Steuerung für den Antrieb einer zwischen einer Betriebsstellung und einer Ruhestellung bewegbaren Anhängerkupplung, welche durch mindestens einen elektrischen Motor angetrieben wird, mit einer Steuerelektronik zum Ansteuern des Motors, welcher eine elektronische Steuerlogik und eine Endstufe zum Schließen eines Schaltelementes in einem Antriebsstromkreis des Motors zum Ansteuern des Motors aufweist, und einer Bedieneinheit.

Im Bereich der Personenkraftwagen, hat es sich mehr und mehr durchgesetzt, Anhängerkupplungen nicht fest in der Betriebs- bzw. Zugstellung hinter dem Pkw anzubringen, sondern so auszubilden, dass sie nur bei Bedarf in ihrer Zugstellung stehen. Werden sie nicht benötigt, können die Anhängerkupplungen entweder abgenommen oder in eine Ruhestellung verschwenkt werden, in der sie nicht hinter dem Stoßfänger vorstehen und vorzugsweise auch nicht sichtbar angeordnet sind. Eine derartige manuell betätigbare Schleppvorrichtung für Kraftfahrzeuge ist aus der DE 26 19 913 A1 bekannt, in welcher die Kupplungskugel um eine in Bezug auf die Fahrzeugachsen schräg ausgerichtete Schwenkachse drehbar ist, so dass die Schleppstange ohne Behinderung unter einem Stoßfänger hindurchgedreht werden kann und in einer hinter dem Stoßfänger liegenden Ruheposition nicht sichtbar ist.

lm Zuge der fortschreitenden Automatisierung sind aus der WO-A-97/10111 elektromotorisch betriebene Anhängerkupplungen für Kraftfahrzeuge bekannt, bei denen die Kupplungsstange entweder mittels einer Verstellspindel axial verschoben oder um eine Schwenkachse gedreht wird. Für den Antrieb ist ein Elektromotor vorgesehen, der über eine im Kofferraum des Fahrzeugs angeordnete Steuerung betätigt werden kann. Durch die Anordnung der Steuerung im Kofferraum wird verhindert, dass ein Verfahren der Anhängerkupplung zwischen ihrer Betriebs- und ihrer Ruhestellung während der Fahrt des Fahrzeugs vorgenommen werden kann.

Die EP 1 225 069 A2 beschreibt eine Antriebssteuerung für eine Antriebsmotoranordnung einer Anhängerkupplung. Um einer schleichenden Verstellung der Anhängerkupplung aus der Gebrauchsstellung entgegenzuwirken, wird vorgeschlagen, dass Steuermittel zur Kompensation eines unbeabsichtigten Verstellens der Zugpartie zu einem automatischen, in zeitlichen Intervallen wiederholten Ansteuern der Antriebsmotoranordnung zu einer zu der mindestens einen vorgebbaren Zugpartie-Stellung gerichteten Bewegungsrichtung ausgestattet sind.

Aus der EP 1 084 872 A2 ist ferner eine Steuerung für eine schwenkbare Anhängerkupplung gemäß dem Oberbegriff des Anspruchs 1 bekannt. Um ein unbefugtes oder unbeabsichtigtes Verfahren der Anhängerkupplung zu verhindern, lässt die Steuerung einen Lauf des Motors nur zu, wenn sich die Anhängerkupplung in der Ruhestellung oder in der verriegelten Betriebsstellung befindet und wenn der Motor des Fahrzeugs nicht läuft.

Eine aufwändigere elektronische Steuerung ist aus der EP 0 832 000 B1 (siehe Oberbegriff des Anspruchs 1) bekannt, bei der die Steuerung für die Anhängerkupplung für Kraftfahrzeuge mit einer Motorsteuerung verbunden ist, welche der Steuerung für die Anhängerkupplung ein Signal ausgibt, dass die Anhängekupplung verschwenkt werden darf, wenn der Motor des Kraftfahrzeugs nicht läuft, bzw. ein Starten des Motors des Kraftfahrzeugs verhindert, während die Anhängerkupplung verfahren wird. Eine derartige Ansteuerung ist aufgrund des Zusammenwirkens vieler elektronischer Komponenten aufwändig und störanfällig, so dass mit einem hohen Wartungsaufwand zu rechnen ist.

Aufgabe der Erfindung ist es daher, eine Steuerung für den Antrieb einer Anhängerkupplung vorzusehen, um bei einem einfachen Aufbau eine zuverlässige Sicherheit gegen Bedienfehler und Fehlfunktionen zu erreichen.

Diese Aufgabe wird erfindungsgemäß mit einer Steuerung gemäß den Merkmalen des Anspruchs 1 gelöst. Es ist vorgesehen, dass zum Ansteuern des Motors mindestens zwei voneinander unabhängige Ereignisse auszulösen sind derart, daß das Ansteuern des Motors durch Schließen des Antriebsstromkreises des Motors mittels eines manuell zu betätigenden Schalters geschieht, so dass ein unerwünschtes Verfahren der Kugelstange aufgrund einer fehlerhaften Ansteuerung durch die Steuerelektronik, bspw. aufgrund eines fehlerhaften Bauteils, mit Sicherheit vermieden werden kann. Das manuelle Betätigen dieses Schalters löst ein Ereignis zum Ansteuern des Motors aus. Ein weiteres Ereignis wird dadurch ausgelöst, dass die Steuerlogik die Endstufe betätigt, sofern alle elektronisch zu überprüfenden Voraussetzungen für das Verfahren der Kugelstange vorliegen, um dadurch den Antriebsstromkreis des Motors durch ein zweites, von dem ersten Schalter unabhängiges Schaltelement zu schließen. Da beide Schalter bzw. Schaltelemente geschlossen sein müssen, um den Motor anzutreiben, wird dadurch bereits eine besondere Sicherheit erreicht. Zusätzlich wäre auch denkbar, dass der manuell zu betätigende Schalter in einem kurzen Zeitabstand zweimal betätigt werden muss, um ein Verfahren der Anhängerkupplung auszulösen. Dies kann durch eine geeignete elektronische Schaltung umgesetzt werden, die nach einer ersten Betätigung des Schalters eine zweite Betätigung desselben Schalters nur in einem bestimmten Zeitfenster zulässt, dessen Grenzen durch einen zeitlichen Mindest- und/oder Höchstabstand zu dem Zeitpunkt der ersten Betätigung gekennzeichnet sind.

Zum Ansteuern des Motors ist es also notwendig, dass sowohl die Endstufe der Steuerlogik als auch ein manuell zu betätigender Schalter den Antriebsstromkreis des Motors schließt, so dass ein Verfahren der Anhängerkupplung nur bei einer einwandfrei funktionierender Steuerelektronik und gleichzeitiger manueller Betätigung durch den Benutzer möglich ist. Durch die Absicherung mittels der Steuerelektronik wird eine Fehlbedienung durch den Benutzer ausgeschlossen. Zudem wird durch den manuell vorzusehenden Schalter, welcher den Antriebsstromkreis für den Motor schließt, verhindert, dass die Antriebssteuerung für den Motor angeregt wird, ohne dass der Benutzer dies wünscht.

Gemäß einer bevorzugten Ausführungsform der Erfindung weist die Bedieneinheit zwei manuell zu betätigende Schalter auf. Durch das Vorsehen von zwei voneinander unabhängig, manuell zu betätigenden Schaltern wird zudem erreicht, dass der Benutzer das Verfahren der Kupplungsstange nur bewusst einleiten kann. Ein versehentliches Auslösen der Verstellbewegung kann erfindungsgemäß dadurch einfach verhindert werden, dass nach Betätigen eines ersten Schalters ein Zeitfenster geöffnet wird, in welchem ein zweiter Schalter zum Ansteuern des Motors betätigt werden kann. Dieses Zeitfenster kann einige Sekunden oder Minuten dauern. Dabei kann der erste Schalter einfacher Weise einen Selbsthaltekreis auslösen, der ein Schaltelement in dem Antriebsstromkreis des Motors für die vorgegebene Schaltzeit geschlossen hält, so dass durch Betätigung des zweiten Schalters in dieser Schaltzeit der Motorstromkreis geschlossen werden kann. Durch Betätigung des ersten Schalters kann vorzugsweise auch die elektronische Steuerlogik aktiviert werden, um das Vorliegen weiterer Ansteuerungsvoraussetzungen zu überprüfen und die Endstufe zu schalten, wenn alle Voraussetzungen erfüllt sind. Die Endstufe ist dabei vorzugsweise auch als Schaltelement ausgebildet, durch das der Antriebsstromkreis des Motors geschlossen werden kann.

Eine weitere Ausführung der Erfindung sieht eine Steuerung für den Antrieb einer zwischen einer Betriebsstellung und einer Ruhestellung bewegbaren Anhängerkupplung vor, welche durch mindestens einen elektrischen Motor angetrieben wird, der im unbestromten Zustand potentialfrei zu der Steuerung ist. So führt das fehlerhafte Anlegen einer Spannung bspw. aufgrund eines Kurzschlusses oder dgl. nicht zum Laufen des Motors, da aufgrund der Potentialfreiheit kein Strom fließen kann. Außerdem lassen sich durch die potentialfreie Anbindung des Motors in den Antriebsstromkreis viele Schaltelemente stromlos schalten, wodurch die Lebensdauer der Schaltelemente verlängert und die Abnutzung der Schaltkontakte reduziert wird. Dies führt zu einer verlängerten Lebensdauer und größerer Wartungsfreiheit der Steuerung. Diese Ausführung der Erfindung führt in Kombination zu den vorbeschriebenen zu einer besonders großen Sicherheit.

Die Potentialfreiheit der Antriebssteuerung lässt sich schaltungstechnisch besonders einfach dadurch lösen, dass die Steuerlogik und die Endstufe galvanisch voneinander getrennt sind.

In diesem Fall kann die Endstufe, insbesondere eine FET-Endstufe, direkt über ein Schaltelement der Bedieneinheit mit der Antriebsspannung versorgt werden.

Zur Erhöhung der Betriebssicherheit kann eine Steuerung entsprechend der eingangs genannten Art gemäß einer weiteren Ausführung der Erfindung mindestens zwei voneinander unabhängige Sensoren zum Feststellen einer Position der Anhängerkupplung, insbesondere deren Betriebsstellung, aufweisen. Dazu sind die Sensoren vorzugsweise mit der Steuerelektronik verbunden, welche die Sensorstellungen insbesondere getrennt voneinander überwacht und bei Abweichungen zwischen zwei Sensoren Fehlermeldungen ausgibt. Eine besonders hohe Redundanz lässt sich durch drei Sensoren erreichen, wobei ein Sensor auch zur Detektion der weniger sicherheitsrelevanten Ruhestellung verwendet werden kann. Durch eine Kombination dieser erfindungsgemäßen Ausgestaltung mit den anderen, vorbeschriebenen Merkmalen, wird eine besonders hohe Sicherheit erreicht.

Zusätzlich kann die Steuerung einen Sensor zur Überwachung des Antriebsstroms des Motors aufweisen, welcher vorzugsweise ebenfalls an die Steuerlogik angeschlossen ist. Dabei kann die Steuerlogik die Stromzufuhr zu dem Motor unterbrechen, wenn das Strombild des Motors einen Fehler aufweist. Insbesondere kann der Stromfluss überwacht werden. Ein erhöhter Stromfluss zeigt ein erhöhtes Drehmoment des Motors an, welches bspw. durch Anstoßen der Kupplungskugel während des Verfahrens gegen ein Hindernis oder das Erreichen der Endstellung hervorgerufen werden kann. Bei Überschreiten bestimmter Stromschwellen kann daher ein Abschalten des Motors vorgesehen werden. Dafür kann ein separates Schaltelement in den Antriebsstromkreis für den Motor integriert sein. Besonders einfach lässt sich diese Funktion jedoch implementieren, wenn die Steuerlogik die FET-Endstufe unterbricht und so ein Verfahren des Motors unmöglich macht.

Zusätzlich kann eine Überwachungsschaltung in der Steuerung vorgesehen sein, welche die Funktion der Steuerlogik überwacht und im Fehlerfall die Stromzufuhr vorzugsweise durch Abschalten der FET-Endstufe unterbricht. Diese Überwachungsschaltung kann insbesondere als ein externer Hardware-Watchstopp ausgebildet sein, dessen Funktion unabhängig von der Steuerlogik und des in der Steuerlogik verwendeten Mikroprozessors ist. Dadurch ist die Überwachungsschaltung unabhängig von der Funktion der Steuerlogik.

Ferner kann die Steuerung mit einem Sensor verbindbar sein, welcher feststellt, ob ein Stecker in einer Anhängersteckdose eingesteckt ist, welche die Signal- oder Lichtanlage des Anhängers mit Strom versorgt. Dieser kann einfacher Weise als in die Anhängersteckdose eingebauter Mikroschalter ausgebildet sein, dessen Signal von einer Fahrzeugsteuerung ausgewertet und an die Steuerung für den Antrieb der Anhängerkupplung weitergegeben wird. In diesem Fall kann der Antriebsstromkreis des Motors von der Steuerung vorzugsweise nur geschlossen werden, wenn kein Stecker eingesteckt ist, da ein eingesteckter Stecker auf das Vorhandensein eines angehängten Anhängers schließen lässt. In diesem Fall soll die Anhängerkupplung nicht in die Ruhestellung verfahren werden können. Einfacher Weise lässt sich dies realisieren, indem die Steuerlogik ein Schließen der Endstufe nicht zulässt oder das Signal des Mikroschalters eine zusätzliche Bedingung für das Schließen des Selbsthaltekreises darstellt.

Eine weitere Sicherung der Steuerung kann dadurch erreicht werden, dass die Spannungsversorgung der Steuerlogik und/oder die Bedieneinheit nur bei eingeschalteter Fahrzeugzündung mit Spannung beaufschlagt ist, so dass eine Betätigung der Anhängerkupplung nur bei eingeschalteter Zündung möglich ist.

Zum Anzeigen des Betriebszustands und möglicher Fehler kann die Bedieneinheit eine Betriebs- und/oder Störanzeige aufweisen.

Um eine einwandfreie Funktion der Steuerung zu ermöglichen, kann die Steuerlogik ferner eine Überprüfungsfunktion aufweisen, welche bei jedem Anschalten der Steuerung elektronische Bauteile, insbesondere Schalter und/oder Sensoren, überprüft und im Falle eines Fehlers auf der Bedieneinheit eine Störungsmeldung ausgibt. Auch kann im Falle eines Fehlers ein Verfahren der Anhängerkupplung durch die Steuerung unterbunden werden.

In Erweiterung ihrer Funktionalität kann die Steuerelektronik für den Antrieb der Anhängerkupplung auch ein Lichtmodul zur Steuerung der Licht- und Signalanlage des Anhängers aufweisen. Damit kann die erfindungsgemäße Steuerung sämtliche für den Betrieb des Anhängers notwendige Funktionen übernehmen. Vorzugsweise sind jedoch das Lichtmodul, die Steuerlogik und die Endstufe in der Steuerlogik räumlich getrennt angeordnet, so dass diese im Fall von Störungen einzeln austauschbar sind und Fehler in einzelnen Bauteilen die Funktionsfähigkeit der jeweils anderen Module nicht beeinflussen. Dies ist insbesondere im Hinblick auf die Lichtanlage von Bedeutung, welche sicherheitsrelevante Einstellungen während der Fahrt des Fahrzeuges betrifft.

Ferner kann die Steuerelektronik eine Schnittstelle zu einem Bordnetz des Kraftfahrzeugs, insbesondere einen CAN-Bus, aufweisen, um bspw. Statusmeldungen von dem Kraftfahrzeug auszuwerten oder an die allgemeine Steuerung des Kraftfahrzeugs auszugeben. So ist es bspw. möglich, den Zustand der Anhängerkupplung auch in einem in zunehmendem Maße üblichen Fahrerinformationsdisplay darstellen zu können.

Weitere Vorteile und Anwendungsmöglichkeiten der vorliegenden Erfindung ergeben sich auch aus der nachfolgenden Beschreibung eines Ausführungsbeispiels und der Zeichnung.

Es zeigen:
- Fig. 1: schematisch den Aufbau einer erfindungsgemäßen Steuerung für den Antrieb einer Anhängerkupplung und
- Fig. 2: einen schematischen Aufbau der Schaltung der Steuerung gemäß Fig. 1.

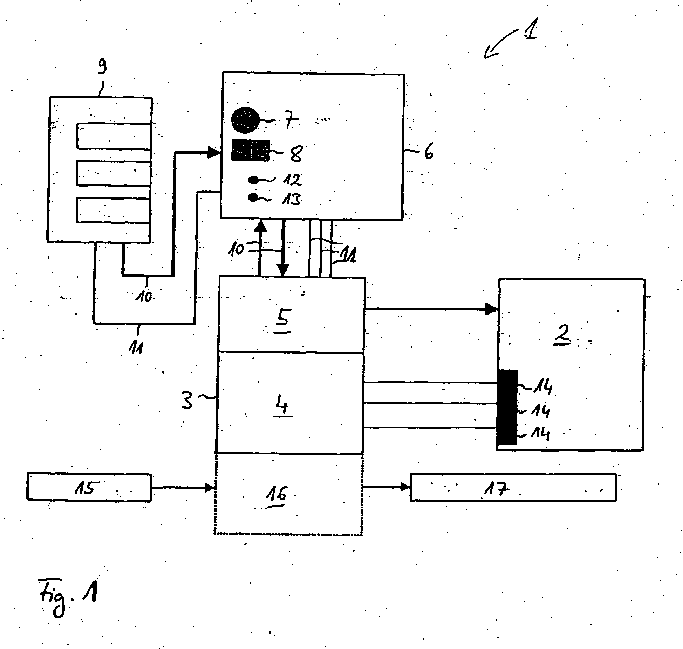

Die in Fig. 1 schematisch dargestellte Steuerung 1 weist einen elektrischen Motor 2 zum Antrieb der Kugelstange einer Anhängerkupplung auf, die in Fig. 1 nicht näher dargestellt ist. Die Anhängerkupplung kann durch den Motor 2 zwischen einer Ruhestellung, in der die Anhängerkupplung in einer am Fahrzeug nicht sichtbaren Position angeordnet ist, und einer Betriebsstellung, in der sich die Anhängerkupplung in Zugstellung befindet, verstellt werden.

Dazu weist die Steuerung 1 eine Steuerelektronik 3 mit einer elektronischen Steuerlogik 4 und einer Endstufe 5 auf, welche zum Ansteuern des Motors 2 ein Schaltelement in einem Antriebsstromkreis des Motors schließt. Ferner weist die Steuerung 1 eine Bedieneinheit 6 mit zwei manuell zu betätigenden Schaltern 7, 8 auf. Durch Betätigen beider Schalter 7, 8 wird der Antriebsstromkreis des Motors 2 geschlossen, sofern alle weiteren, von der elektronischen Steuerlogik 4 überprüften Voraussetzungen zum Verfahren der Anhängerkupplung erfüllt sind. Dazu ist der erste Schalter 7 als sich selbst zurückstellender Dreh- oder Tastschalter und der zweite Schalter 8 als Wippschalter ausgebildet, wobei durch den zweiten Schalter 8 je nach betätigter Richtung die Verfahrrichtung der Anhängerkupplung vorgegeben werden kann.

Elektrisch wird die Steuerung 1 über das Fahrzeugnetz 9 versorgt. Dabei wird sowohl der Antriebsstromkreis 10 als auch der Versorgungsstromkreis 11 der Steuerelektronik 3 über die Bedieneinheit 6 zugeführt. Der Antriebsstromkreis 10 kann bspw. direkt oder über die elektronische Steuereinheit des Pkws an eine Klemme angeschlossen sein, die ein 12-Volt-Bordnetz zur Verfügung stellt. Der Versorgungsstromkreis 11 ist vorzugsweise über eine Klemme an eine Spannungsversorgung angeschlossen, welche nur im Fall einer eingeschalteten Zündung eine Versorgungsspannung ausgibt.

Zur Anzeige der verschiedenen Status der Steuerung sind in der Bedieneinheit 6 eine Betriebsanzeige 12 mit einer insbesondere grünen LED und eine Störanzeige 13 mit einer insbesondere roten LED vorgesehen.

Zur Überwachung der jeweiligen Stellung der Anhängerkupplung sind drei insbesondere als Mikroschalter ausgebildete Sensoren 14 an der Anhängerkupplung ausgebildet, von denen mindestens zwei die Betriebsstellung der Anhängerkupplung aus Redundanzgründen unabhängig voneinander überwachen. Der dritte Sensor 14 kann ebenfalls der Überwachung der Betriebsstellung dienen. Es ist jedoch auch möglich, den dritten Sensor 14 zur Überwachung der Ruhestellung der Anhängerkupplung einzusetzen. Alle Sensoren 14 sind mit der elektronischen Steuerlogik 4 verbunden, welche die Signale der Sensoren 14 auswertet und abhängig von den Sensorwerten die Endstufe 5 und/oder die Betriebs- bzw. Störanzeigen 12, 13 schaltet.

Ferner ist die Steuerelektronik 3 an einen Fahrzeugbus angeschlossen, auf den für die Ansteuerung von einzelnen Komponenten des Fahrzeugs wesentliche Informationen ausgegeben werden. Bspw. kann die Steuerelektronik 4 so Statusanzeigen auch an den Fahrzeugbus ausgeben, damit diese auf einem Informationsdisplay im Cockpit dargestellt werden. Ferner kann die Steuerelektronik 3 ein Lichtmodul 16 aufweisen, welches die Licht- und Signalanlage 17 des Anhängers über die Anhängersteckdose steuert.

Die Steuerelektronik 3 und die Bedieneinheit 6 sind dabei vorzugsweise im Kofferraum des Fahrzeugs derart angeordnet, dass ein versehentliches Betätigen der ersten und zweiten Schalter 7, 8 bspw. durch verrutschende Gepäckstücke nicht möglich ist. Dazu kann die als Control-Panel ausgebildete Bedieneinheit 6 insbesondere mit einer bruchsicheren Abdeckung versehen sein.

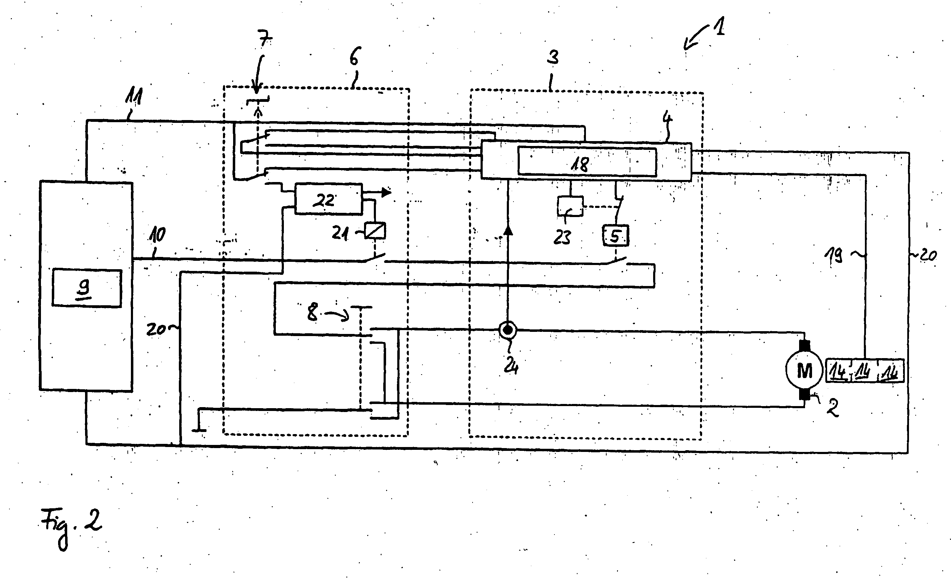

Die Funktionsweise der Steuerung 1 wird nachfolgend anhand des schematischen Schaltplanes gemäß Fig. 2 näher beschrieben.

Von dem Fahrzeugnetz 9 kann bspw. über eine nicht näher dargestellte elektronische Steuereinheit ein Versorgungsstromkreis 11 über die Bedieneinheit 6 der Steuerelektronik 3 zugeführt werden, so dass die Versorgungsspannung sowohl in der Bedieneinheit 6 als auch in der Steuerelektronik 3 zur Verfügung steht. Dabei ist der Versorgungsstromkreis 11 an die Klemme des Fahrzeugnetzes 9 angeschlossen, welche ein Spannungssignal nur bei eingeschalteter Zündung liefert, so dass insbesondere die elektronische Steuerlogik 4 mit dem Mikroprozessor 18 nur dann mit Strom versorgt wird und arbeitet, wenn die Zündung des Fahrzeugs eingeschaltet ist.

An die Steuerlogik 4 sind die Sensoren 14 zur Detektion der Position der Anhängerkupplung über eine Verbindung 19 mit der Steuerlogik 4 verbunden. Über eine weitere Verbindung 20 ist ein weiterer, in Fig. 2 nicht dargestellter Sensor mit der Steuerlogik 4 verbunden, welcher das Einstecken eines Steckers in die Anhängersteckdose feststellt. Damit kann die Steuerelektronik 3 feststellen, ob ein Anhängerstecker in die Anhängersteckdose eingesteckt ist, was auf einen aktiven Anhängerbetrieb schließen lässt. In diesem Fall kann die Steuerelektronik 4 die Startfreigabe zum Verfahren der Kugelstange über den Motor 2 unterbinden.

Dazu kann die Steuerelektronik 4 über die Endstufe 5 den Antriebsstromkreis 10 unterbrechen. Der Antriebsstromkreis 10 ist über das Fahrzeugnetz 9 oder direkt an die Klemme des Fahrzeugs angeschlossen, die eine Versorgungsspannung zum Antrieb des Motors 2 bereitstellt. Der Antriebsstromkreis 10 ist dabei durch mehrere Schaltelemente 5, 8 und 21 unterbrochen, die alle geschlossen werden müssen, um eine Verfahrfreigabe des Motors 2 und mit diesem der Anhängerkupplung zu erreichen.

Der Funktionsablauf der Verfahrfreigabe geschieht dabei wie folgt: Durch Betätigen des ersten Schalters 7 der Bedieneinheit 6 wird ein Selbsthaltekreis 22 aktiviert, sofern die Verbindung 20 von dem Sensor in der Anhängersteckdose signalisiert, dass kein Stecker in die Anhängersteckdose eingesteckt ist. Dann aktiviert der Selbsthaltekreis 22 für eine vorgegebene Zeitdauer, insbesondere einige Sekunden oder Minuten, das Schaltelement 21, welches den im nicht geschalteten Zustand offenen Antriebskreis 10 schließt. Gleichzeitig gibt der erste Schalter 7 ein Betätigungssignal an die Steuerlogik 4 aus, welche das Vorliegen der Verfahrvoraussetzungen überprüft.

Dazu werden insbesondere die Signale der Sensoren 14 zur Positionsdetektion der Anhängerkupplung sowie des Sensors aus der Anhängersteckdose ausgewertet. Zusätzlich wird die Steuerelektronik selbst über eine externe Überwachungsschaltung 23, insbesondere einer eigenständig arbeitenden Hardware-Watchdog, überwacht, der im Falle eines Fehlers der Steuerlogik 4 die Verbindung der Steuerlogik 4 zu der als FET-Schalter ausgebildeten Endstufe 5 unterbricht. Bei funktionierender Steuerlogik 4 sowie dem Vorliegen aller Voraussetzungen für die Verfahrfreigabe schließt dagegen die Endstufe 5 den Antriebsstromkreis 10. Durch Betätigung des zweiten, als Wipptaster ausgeführten Schalters 8 wird der Motor 2 zum Antrieb der Anhängerkupplung in der gewünschten Polrichtung an den Antriebsstromkreis 10 angeschlossen und geerdet, sodass die Anhängerkupplung in die gewünschte Stellung verfahren werden kann.

Durch die Startfreigabe an der Bedieneinheit 6 bewegt sich die Kugelstange der Anhängerkupplung nun vollautomatisch bspw. aus der Ruhestellung in die Betriebsstellung. Die aktive Bewegung wird durch das Blinken der grünen Betriebsanzeige 12 an der Bedieneinheit 6 dargestellt und durch einen kurzen Quittungston eines in der Bedieneinheit 6 integrierten Summers nach Einleitung der Bewegung angezeigt. Nach einer kurzen Zeit ist die Anhängerkupplung in der Betriebsstellung verriegelt, was durch das dauerhafte Leuchten der grünen Betriebsanzeige 12 angezeigt wird. Solange die Fahrzeugzündung eingeschaltet ist, werden die Sensoren 14 zur Verriegelung der Kugelstange in der Betriebs- oder Ruhestellung permanent überwacht. Falls beim Verriegeln eine Störung auftritt, wird dies dem Fahrzeugführer durch die rote Störanzeige 13 und den Summer signalisiert. Durch Einstecken des Anhängersteckers in die Anhängersteckdose wird der Steuerelektronik 4 über die Verbindung 20 die Verfahrfreigabe wieder entzogen, so dass die Endstufe 5 sich öffnet und ein Verfahren der Anhängerkupplung ausgeschlossen ist, bis der Anhänger abgekuppelt wird und der Anhängerstecker aus der Anhängersteckdose gezogen ist.

Bei ausgeschalteter Fahrzeugzündung wird der an die Klemme angeschlossene Versorgungsstromkreis 11 deaktiviert, so dass die komplette Steuerelektronik 3 abgeschaltet wird. Daher fließt kein Ruhestrom, so dass eine Fehlfunktion der Steuerung 1 bzw. der Steuerelektronik 3 in diesem Zustand ausgeschlossen wird.

Während des Antriebs des Motors 2 wird der in dem Antriebsstromkreis 10 fließende Strom durch einen Stromsensor 24 überwacht, der bei einem Fehler im Strombild, insbesondere einer erhöhten Stromaufnahme, die auf ein erhöhtes Motordrehmoment hindeutet, abgeschaltet wird. Bei einem erhöhten Motordrehmoment befindet sich die Anhängerkupplung entweder in der Betriebs- oder Ruhestellung oder die Kupplungsstange ist während des Verfahrwegs an ein Hindernis angestoßen. In beiden Fällen sollte zur Vermeidung von Beschädigungen der Motorstromkreis 10 unterbrochen werden. Dies geschieht dadurch, dass die Steuerelektronik 4 über die Endstufe 5 den Antriebsstromkreis unterbricht und ggf. eine Störmeldung an der Störanzeige 13 des Bedienelements 6 ausgibt.

Die Steuerung kann über ein Busnetz an einen Fahrzeugbus angeschlossen werden, um zusätzlich bestimmte Statussignale des Fahrzeugs auszuwerten oder an die Fahrzeugsteuerung auszugeben. Damit weist die Steuerung 1 eine hohe Flexibilität auf und kann universell bei vielen verschiedenen Fahrzeugen eingesetzt werden, ohne dass nennenswerte Änderungen in der Steuerelektronik 3 notwendig sind.

### Bezugszeichenliste:

- 1: Steuerung
- 2: elektrischer Motor
- 3: Steuerelektronik
- 4: elektronische Steuerlogik
- 5: Endstufe
- 6: Bedieneinheit
- 7: erster Schalter
- 8: zweiter Schalter
- 9: Fahrzeugnetz
- 10: Antriebsstromkreis
- 11: Versorgungsstromkreis
- 12: Betriebsanzeige
- 13: Störanzeige
- 14: Sensoren
- 15: Fahrzeugbus
- 16: Lichtmodul
- 17: Licht- und Signalanlage
- 18: Mikroprozessor
- 19: Verbindung
- 20: Verbindung
- 21: Schaltelement
- 22: Selbsthaltekreis
- 23: externe Überwachungsschaltung
- 24: Stromsensor

## Patentansprüche

1. Steuerung für den Antrieb einer zwischen einer Betriebsstellung und einer Ruhestellung bewegbaren Anhängerkupplung, welche durch mindestens einen elektrischen Motor (2) angetrieben wird, mit einer Steuerelektronik (3) zum Ansteuern des Motors (2), welche eine elektronische Steuerlogik (4) und eine Endstufe (5) zum Schließen eines Schaltelements in einem Antriebsstromkreis (10) des Motors (2) aufweist, und einer Bedieneinheit (6), wobei die Bedieneinheit (6) zum Ansteuern des Motors (2) einen den Antriebsstromkreis (10) unterbrechenden, manuell zu betätigenden Schalter (8) zum Schließen des Antriebsstromkreises (10) des Motors (2) aufweist und wobei zum Antreiben des Motors (2) als zwei voneinander unabhängige, ausgelöste Ereignisse das Schaltelement der Endstufe (5) und der Schalter (8) geschlossen sein müssen, **dadurch gekennzeichnet, dass** der Schalter (8) als Wipptaster ausgeführt ist, welcher bei Betätigung den Motor (2) in der gewünschten Polrichtung an den Antriebsstromkreis (10) anschließt und erdet.

2. Steuerung nach Anspruch 1, **dadurch gekennzeichnet, dass** die Bedieneinheit (6) zwei manuell zu betätigende Schalter (7, 8) aufweist, wobei insbesondere nach Betätigung eines ersten Schalters (7) ein Zeitfenster geöffnet wird, in welchem ein zweiter Schalter (8) zum Ansteuern des Motors (2) betätigt werden kann.

3. Steuerung nach Anspruch 1 oder 2, **dadurch gekennzeichnet, dass** der Motor (2) im unbestromten Zustand potentialfrei zu der Steuerung (1) ist.

4. Steuerung nach einem der vorhergehenden Ansprüche, **dadurch gekennzeichnet, dass** die Steuerlogik (4) und die Endstufe (5) galvanisch getrennt sind.

5. Steuerung nach einem der vorhergehenden Ansprüche, **dadurch gekennzeichnet, dass** die Endstufe (5), insbesondere eine FET-Endstufe, direkt über ein Schaltelement (21) der Bedieneinheit (6) mit der Antriebsspannung versorgt wird.

6. Steuerung nach einem der vorhergehenden Ansprüche, **dadurch gekennzeichnet, dass** die Steuerung (1) mindestens zwei voneinander unabhängige Sensoren (14) zum Feststellen einer Position der Anhängerkupplung, insbesondere deren Betriebsstellung, aufweist.

7. Steuerung nach einem der vorhergehenden Ansprüche, **dadurch gekennzeichnet, dass** die Steuerung (1) einen Sensor (24) zur Überwachung des Antriebsstroms des Motors (2) aufweist, wobei die Steuerlogik (4) die Stromzufuhr zu dem Motor (2) unterbricht, wenn das Strombild des Motors (2) einen Fehler aufweist.

8. Steuerung nach einem der vorhergehenden Ansprüche, **dadurch gekennzeichnet, dass** eine Überwachungsschaltung (23), insbesondere ein externer Hardware-Watchdog, die Funktion der Steuerlogik (4) überwacht und im Fehlerfall die Stromzufuhr zu dem Motor (2) unterbricht.

9. Steuerung nach einem der vorhergehenden Ansprüche, **dadurch gekennzeichnet, dass** die Steuerung (1) mit einem Sensor verbindbar ist, welcher feststellt, ob ein Stecker in eine Anhängersteckdose eingesteckt ist.

10. Steuerung nach einem der vorhergehenden Ansprüche, **dadurch gekennzeichnet, dass** die Spannungsversorgung der Steuerlogik (4) und/oder die Bedieneinheit (6) nur bei eingeschalteter Fahrzeugzündung mit Spannung beaufschlagt ist.

11. Steuerung nach einem der vorhergehenden Ansprüche, **dadurch gekennzeichnet, dass** die Bedieneinheit (6) eine Betriebs- und/oder Störanzeige (12, 13) aufweist.

12. Steuerung nach einem der vorhergehenden Ansprüche, **dadurch gekennzeichnet, dass** die Steuerlogik (4) eine Überprüfungsfunktion aufweist, welche bei jedem Anschalten der Steuerung (1) elektronische Bauteile, insbesondere Schalter (7, 8) und/oder Sensoren (14, 23), überprüft.

13. Steuerung nach einem der vorhergehenden Ansprüche, **dadurch gekennzeichnet, dass** die Steuerelektronik (3) ein Lichtmodul (16) zur Steuerung der Licht- und Signalanlage (17) des Anhängers aufweist.

14. Steuerung nach einem der vorhergehende Ansprüche, **dadurch gekennzeichnet, dass** die Steuerelektronik (3) eine Schnittstelle zu einem Bordnetz des Kraftfahrzeugs, insbesondere einem Can-Bus, aufweist.

## Claims

1. A control for the drive of a trailer coupling which is movable between an operating position and an idle position and which is driven by at least one electric motor (2), with control electronics (3) for controlling the motor (2), said control electronics (3) comprising an electronic control logic (4) and an end stage (5) for closing of a switching element in a drive circuit (10) of the motor (2), and with an operating unit (6), wherein for controlling the motor (2) the operating unit (6) has a switch (8) interrupting the drive circuit (10), to be operated manually for closing the drive circuit (10) of the motor (2), and wherein for driving the motor (2) the switching element of the end stage (5), and the switch (8) must be closed as two triggered events which are independent of each other, **characterized in that** the switch (8) is constructed as a rocker key button, which on actuation connects and earths the motor (2) to the drive circuit (10) in the desired pole direction.

2. The control according to Claim 1, **characterized in that** the operating unit (6) has two switches (7, 8) to be operated manually, in which case specifically after operation of a first switch (7) a time window is opened, in which a second switch (8) can be operated for controlling the motor (2).

3. The control according to Claim 1 or 2, **characterized in that** in the unpowered state, the motor (2) is potential-free to the control (1).

4. The control according to one of the preceding claims, **characterized in that** the control logic (4) and the end stage (5) are electrically isolated.

5. The control according to one of the preceding claims, **characterized in that** the end stage (5), specifically an FET end stage, is directly supplied with driving voltage by way of a switching element (21) of the operating unit (6).

6. The control according to one of the preceding claims, **characterized in that** the control (1) has at least two independent sensors (14) for detecting a position of the trailer coupling, in particular its operating position.

7. The control according to one of the preceding claims, **characterized in that** the control (1) has a sensor (24) for monitoring the driving current of the motor (2), the control logic (4) interrupting the supply of current to the motor (2) when the current signature of the motor (2) exhibits a fault.

8. The control according to one of the preceding claims, **characterized in that** a monitoring circuit (23), specifically an external hardware watchdog, monitors the functioning of the control logic (4) and, in the event of a fault, interrupts the supply of current to the motor (2).

9. The control according to one of the preceding claims, **characterized in that** the control (1) can be connected to a sensor which detects whether a plug is inserted in a trailer socket.

10. The control according to one of the preceding claims, **characterized in that** the power supply of the control logic (4), and/or the operating unit (6) is only made live when the vehicle ignition is switched on.

11. The control according to one of the preceding claims, **characterized in that** the operating unit (6) has an operating-status and/or fault indicator (12, 13).

12. The control according to one of the preceding claims, **characterized in that** the control logic (4) includes a checking function which, each time the control (1) is switched on, checks electronic components, specifically switches (7, 8) and/or sensors (14, 23).

13. The control according to one of the preceding claims, **characterized in that** the control electronics (3) include a light module (16) for controlling the lighting and signalling system (17) of the trailer.

14. The control according to one of the preceding claims, **characterized in that** the control electronics (3) include an interface to an on-board supply system of the motor vehicle, specifically a CAN bus.

## Revendications

1. Commande destinée à entraîner un attelage de remorque mobile entre une position fonctionnelle et une position de repos, lequel attelage est entraîné par au moins un moteur électrique (2), comportant une électronique de commande (3) permettant de commander le moteur (2) et qui présente une logique de commande électronique (4) et un étage final (5) permettant de fermer un élément de connexion dans un circuit électrique d'entraînement (10) du moteur (2), une unité de manoeuvre (6), l'unité de manoeuvre (6) présentant, pour commander le moteur (2), un interrupteur (8) interrompant le circuit électrique d'entraînement (10), devant être actionné manuellement pour fermer le circuit électrique d'entraînement (10) du moteur (2), et l'élément de connexion de l'étage final (5) et l'interrupteur (8) devant être fermés pour l'entraînement du moteur (2) en tant que deux événements indépendants l'un de l'autre et déclenchés, **caractérisée en ce que** l'interrupteur (8) est conçu sous forme d'interrupteur à bascule qui, en cas d'actionnement, raccorde le moteur (2) dans le sens polaire souhaité au circuit électrique d'entraînement (10) et le met à la terre.

2. Commande selon la revendication 1, **caractérisée en ce que** l'unité de manoeuvre (6) présente deux interrupteurs (7, 8) devant être actionnés manuellement, une fenêtre temporelle étant ouverte, en particulier après l'actionnement d'un premier interrupteur (7), dans laquelle un deuxième interrupteur (8) peut être actionné pour commander le moteur (2).

3. Commande selon la revendication 1 ou 2, **caractérisée en ce que** le moteur (2), lorsqu'il n'est pas alimenté en courant, est sans potentiel par rapport à la commande (1).

4. Commande selon l'une quelconque des revendications précédentes, **caractérisée en ce que** la logique de commande (4) et l'étage final (5) sont séparés galvaniquement.

5. Commande selon l'une quelconque des revendications précédentes, **caractérisé en ce que** l'étage final (5), en particulier un étage final FET est alimenté directement avec la tension d'entraînement par l'intermédiaire d'un élément de connexion (21) de l'unité de manoeuvre (6).

6. Commande selon l'une quelconque des revendications précédentes, **caractérisé en ce que** la commande (1) présente au moins deux capteurs (14) indépendants l'un de l'autre, permettant de définir une position de l'attelage de remorque, en particulier sa position fonctionnelle.

7. Commande selon l'une quelconque des revendications précédentes, **caractérisé en ce que** la commande (1) présente un capteur (24) permettant de surveiller le courant d'entraînement du moteur (2), la logique de commande (4) interrompant l'alimentation en courant du moteur (2) lorsque la courbe du courant du moteur (2) présente une anomalie.

8. Commande selon l'une quelconque des revendications précédentes, **caractérisé en ce qu'**un circuit de surveillance (23), en particulier un chien de garde du matériel externe, surveille la fonction de la logique de commande (4) et interrompt l'alimentation en courant du moteur (2) en cas d'anomalie.

9. Commande selon l'une quelconque des revendications précédentes, **caractérisé en ce que** la commande (1) peut être reliée à un capteur qui constate si une fiche mâle est enfichée dans une prise de courant d'une remorque.

10. Commande selon l'une quelconque des revendications précédentes, **caractérisé en ce que** l'alimentation en tension de la logique de commande (4) et/ou l'unité de manoeuvre (6) sont mises sous tension uniquement quand l'allumage du véhicule est activé.

11. Commande selon l'une quelconque des revendications précédentes, **caractérisé en ce que** l'unité de manoeuvre (6) présente un affichage de fonctionnement et/ou de panne (12, 13).

12. Commande selon l'une quelconque des revendications précédentes, **caractérisé en ce que** la logique de commande (4) présente une fonction de surveillance qui vérifie, lors de chaque mise sous tension de la commande (1), des composants électroniques, en particulier les interrupteurs (7, 8) et/ou les capteurs (14, 23).

13. Commande selon l'une quelconque des revendications précédentes, **caractérisé en ce que** l'électronique de commande (3) présente un module d'éclairage (16) permettant de commander l'installation lumineuse et de signalisation (17) de la remorque.

14. Commande selon l'une quelconque des revendications précédentes, **caractérisé en ce que** l'électronique de commande (3) présente une interface vers un réseau de bord du véhicule, en particulier un bus Can.
